# EUROPÄISCHE PATENTSCHRIFT

(11) **EP 2 353 354 B1**
(45) Veröffentlichungstag und Bekanntmachung des Hinweises auf die Patenterteilung: **20.05.2020**
(21) Anmeldenummer: 11000646.7
(22) Anmeldetag: 27.01.2011
(51) Int. Cl.: A01C 5/06, A01C 7/20

(54) **Doppelscheibenschar mit Tiefenführungsrolle**
Double disc coulter with depth guide roller
Soc à double disque doté d'un rouleau de guidage en profondeur

(30) Priorität: 29.01.2010 DE 102010006169
(43) Veröffentlichungstag der Anmeldung: 10.08.2011
(73) Patentinhaber: Lemken GmbH & Co. KG, 46519 Alpen (DE)
(72) Erfinder: Gebbeken, Martin, Dipl.-Ing., 46519 Alpen (DE); Werries, Dieter, 46519 Alpen (DE); Peaßens, Christian, 47661 Issum (DE); Lukas, Thomas, 48683 Ahaus-Wüllen (DE); Berendsen, Mark, 7044 AJ Lengel (NL); Geraats, Marcel, 42334 Nettetal (DE)

(56) Entgegenhaltungen:
- EP-A1- 1 911 339
- WO-A2-2008/086283
- CA-A1- 2 549 371
- US-B1- 6 389 999

## Beschreibung

Die Erfindung betrifft eine Verteilmaschine mit mehreren Verteilscharen mit Tiefenführungsrolle gemäß dem Oberbegriff des Patentanspruchs 1 Eine derartige Verteilmaschine. ist zum Beispiel der europäischen Patentanmeldung EP 1 911 340 zu entnehmen. Bei dem Gegenstand dieser Anmeldung handelt es sich um ein Doppelscheibenschar als Verteilschar mit Tiefenführungsrolle, das über die Tiefenführungsrolle in der Arbeitstiefe geführt wird. Das Verteilschar wird dabei über eine Schardruckeinrichtung in den Boden gedrückt und über die Tiefenführungsrolle in der Tiefe geführt. Dabei muss die Schardruckeinrichtung eine so große Kraft auf das Verteilschar ausüben, dass in allen Arbeitssituationen und Bodenverhältnissen die gewünschte Ablagetiefe für das Verteilgut bzw. Saatgut erreicht wird. Dies hat allerdings den Nachteil, dass in leichten Bodenverhältnissen die Tiefenführungsrolle mit zu viel Abstützkraft beaufschlagt wird und dadurch zu tief in den Boden einsinken kann oder eine Saatreihe zu stark angedrückt wird. In extremen Situationen kann das Verteilschar die eingestellte Arbeitstiefe nicht erreichen, weil der eingestellte Schardruck auf das Verteilschar nicht ausreicht. Das Verteilgut bzw. Saatgut wird dann zu flach abgelegt und die Saatreihe nicht mehr durch die Tiefenführungsrolle angedrückt. Das US-Patent US 6 389 999 B1 zeigt eine Einzelkornsämaschine mit Säaggregaten, daran angeordneten Scharen und seitlich davon angeordneten Tiefenführungsrädern. Je Säaggregat wird ein Schardruck ermittelt und individuell mit dem auf die Schare aufgebrachten Zylinderdruck verglichen und einzeln angepasst. In der kanadischen Offenlegung CA 2 549 371 A1 wird ebenfalls eine individuelle Schardruckerfassung gezeigt, welche jeweils einzeln die Kräfte erfasst und anhand dieser Hydraulikzylinder zur Schardruckbeaufschlagung steuert.

Aufgabe der Erfindung ist es, eine Schardruckeinrichtung bereit zu stellen, die so viel Kraft auf das Verteilschar wie ein Säschar oder ein Düngeschar ausübt, dass Saatgut oder Dünger immer auf die gewünschte Ablagetiefe abgelegt wird und gleichzeitig die Tiefenführungsrolle mit so viel Abstützkraft belastet wird, wie es für ein optimales Andrücken der Saatreihe bzw. Düngereihe erforderlich ist.

Diese Aufgabe wird erfindungsgemäß durch die Merkmale des kennzeichnenden Teils des Patentanspruchs 1 gelöst.

Dadurch dass sich das Verteilschar auf die Tiefenführungsrolle abstützt und diese Abstützkraft über einen Messfühler erfasst wird, kann die Schardruckeinrichtung über die Regeleinrichtung so eingestellt werden, dass das Verteilschar immer die eingestellte Ablagetiefe bzw. Sätiefe erreicht und die Tiefenführungsrolle auf den Boden den gewünschten Abstützdruck ausübt. Die Verteilschare können dabei als Säschare oder Düngeschare wie Doppelscheibenschare, Einscheibenschare, Stiefelschare oder Zinkenschare einer Verteilmaschine wie Drillmaschine, Düngemaschine oder Bestellkombination ausgebildet sein.

Die Erfindung sieht weiter vor, dass der Abstützdruck der Tiefenführungsrolle auf den Boden einstellbar ist. Dadurch dass der Abstützdruck einstellbar ist, kann in Abhängigkeit von dem Boden, von dem Saatgut und von der Ablagetiefe des Saatgutes der Abstützdruck der Tiefenführungsrolle und damit der Druck auf die Saatreihe wie erforderlich vorgegeben und erreicht werden.

Nach einer weiteren vorteilhaften Ausführungsform ist daran gedacht, dass die über die Schardruckeinrichtung und den Energiespeicher auf das Verteilschar ausgeübte Abstützkraft durch die Regeleinrichtung so geregelt wird, dass der Abstützdruck der Tiefenführungsrolle auf den Boden konstant bzw. annähernd konstant bleibt. Wenn ein homogenes Saatbett vorliegt, kann auf dem betreffenden Feld mit einem bestimmten Abstützdruck der Tiefenführungsrolle auf den Boden gearbeitet werden. Die Regeleinrichtung muss dafür sorgen, dass in diesem Fall der Abstützdruck der Tiefenführungsrolle auf den Boden möglichst konstant bleibt.

Nach einer weiteren vorteilhaften Ausführungsform ist vorgesehen, dass die Tiefenführungsrolle einen Schwenkarm aufweist, der um eine quer zur Arbeitsrichtung und im Abstand zu der Querachse des Verteilschares angeordneten Schwenkachse in vertikaler Richtung schwenkbar mit dem Scharrahmen und über ein Verbindungsglied mit dem Scharträger des Verteilschares verbunden ist, wobei der Messfühler dem Verbindungsglied, dem Schararm, dem Schwenkarm, dem Scharrahmen oder der Schwenkachse der Tiefenführungsrolle zugeordnet ist. Das Verteilschar wie z.B. ein Doppelscheibenschar stützt sich über das Verbindungsglied auf die Tiefenführungsrolle ab. Somit kann ein Messfühler direkt am Verbindungsglied oder an den benachbarten Bauteilen angeordnet werden, da dort ausreichend genaue Messdaten erfasst werden können, um den gewünschten Abstützdruck der Tiefenführungsrolle auf den Boden regelungstechnisch sicherzustellen.

Außerdem ist vorgesehen, dass die Verteilmaschine eine Steuerung aufweist, die gemäß der abgespeicherten Daten einer zugehörigen Schlagdatei GPS-unterstützt den Abstützdruck der Tiefenführungsrolle auf den Boden variabel regelnd ausgebildet ist. Durch diese Ausführungsform ist es möglich, den Abstützdruck der Tiefenführungsrolle auf den Boden den wechselnden Bodenverhältnissen anzupassen. Per GPS oder anderer gleichartiger Satellit gestützten Einrichtungen kann so die Verteilmaschine nicht nur hinsichtlich einer optimalen Ausbringmenge eingestellt werden, sondern auch bei Einhaltung der vorgegebenen Ablagetiefe hinsichtlich einer optimalen Rückverfestigung der Saatreihe durch die Tiefenführungsrolle.

Die Erfindung sieht weiter vor, dass der Messfühler als Sensor oder Kraftmessbolzen ausgebildet ist. Je nach dem, wo die Abstützkraft des Verteilschares auf die Tiefenführungsrolle erfasst wird, kann so ein geeigneter Messfühler eingesetzt werden. Denkbar ist auch der Einsatz von Dehnungsmessstreifen als Messfühler oder auch anderen geeigneten Messsystemen.

Nach einer weiteren vorteilhaften Lösung ist die Achse der Tiefenführungsrolle als Kraftmessbolzen ausgebildet. Wenn dies der Fall ist, kann der Abstützdruck der Tiefenführungsrolle auf den Boden direkt und unmittelbar im Bereich der Tiefenführungsrolle erfasst werden. Der bauliche Aufwand wird dadurch relativ niedrig gehalten und der Abstützdruck der Tiefenführungsrolle auf den Boden wird genau da gemessen, wo er auch ausgeübt wird. Denkbar ist es auch, die Schwenkachse der Tiefenführungsrolle als Kraftmessbolzen auszubilden.

Die Erfindung sieht weiter vor, dass die Schardruckeinrichtung aus mehreren Hydraulikzylindern besteht, dass jedes Verteilschar über einen Hydraulikzylinder in Sästellung gehalten wird und dass die Hydraulikzylinder so hydraulisch miteinander verbunden sind, das alle Hydraulikzylinder mit dem gleichen Öldruck beaufschlagt werden. Je nach Bedarf kann jedes Verteilschar mit Tiefenführungsrolle separat mit einem Messfühler ausgestattet werden und dementsprechend auch der Abstützdruck jeder einzelnen Tiefenführungsrolle auf den Boden individuell geregelt werden. Erfindungsgemäß wird nur ein Verteilschar mit Tiefenführungsrolle mit einem Messfühler ausgerüstet. Über die Regeleinrichtung wird dann das Ergebnis des einen Messfühlers auf alle Verteilschare mit Tiefenführungsrollen übertragen. Über eine Schardruckeinrichtung mit Hydraulikzylindern kann dies sehr einfach geschehen, wenn alle Hydraulikzylinder hydraulisch miteinander verbunden sind. Der Systemdruck wird dann so geregelt, dass alle Säschare bzw. Verteilschare immer sicher in der gewünschten Ablagetiefe geführt werden und die Tiefenführungsrollen den gewünschten Abstützdruck erzeugen. Anstatt einer Vielzahl von Hydraulikzylindern kann auch ein Querzylinder oder mehrere Querzylinder mit jeweils mehreren nebeneinander angeordneten Kolbenstangenführungen mit Kolbenstangen vorgesehen werden, die jeweils auf die einzelnen Verteilschare einwirken. Da die Kolbenstangen in den gleichen Druckraum hineinragen werden sie praktisch alle mit dem gleichen Druck beaufschlagt.

Der Messfühler kann an unterschiedlichen Stellen des Verteilschares angeordnet werden. Nach einer Variante ist beabsichtigt, dass das Verbindungsglied als Verbindungslenker ausgebildet ist, der z. B. mit einem als Sensor ausgebildeten Messfühler bestückt ist.

Konkret ist dabei daran gedacht, dass der Verbindungslenker als Seil ausgebildet ist und dass über den Messfühler eine Ermittlung der Zugkräfte in dem Seil erfolgt. Das Verbindungsglied ist also bei dieser Ausführungsform der Erfindung als Verbindungslenker bzw. Seil ausgebildet, das seinerseits mit einem als Sensor ausgebildeten Messfühler ausgerüstet ist. Über letzteren werden die Zugkräfte in dem Seil ermittelt, welche als Grundlage für die Regelung der Abstützkraft des Verteilschares auf die Tiefenführungsrolle dienen.

Schließlich ist es als vorteilhaft anzusehen, wenn das Verteilschar über die Tiefenführungsrolle parallel oder kinematisch parallel in der Arbeitstiefe geführt ist. Hierzu bildet sich ein Parallelogramm aus, das aus parallel angeordnetem Traglenker und Führungslenker besteht. Die kinematische Parallelität wird zum Beispiel durch eine entsprechende Verbindung von Verbindungslenker mit Scharträger und Schwenkarm erreicht, die so ausgebildet ist, dass das Verteilschar in der Arbeitstiefe kinematisch parallel zu der Tiefenführungsrolle geführt wird.

Eine weitere Form der Tiefenführung bzw. Tiefenregelung des Verteilschares und der Abstützdruckregelung der Tiefenführungsrolle kann außerdem dadurch erfolgen, dass z.B. die Frequenz und die Amplituden der Bewegung des Verteilschares erfasst und ausgewertet werden. Eine hohe Frequenz und große Amplitudenausschläge zeigen an, dass die Sätiefe variiert und der Schardruck nicht ausreicht und die Tiefenführungsrolle praktisch keinen Abstützdruck erzeugt. Dies führt dazu, dass regeltechnisch eine Erhöhung des Schardrucks und dadurch auch eine Erhöhung des Abstützdruckes der Tiefenführungsrolle durchgeführt werden. Umgekehrt zeigt eine ruhige Scharführung an, dass der Schardruck ausreicht bzw. zu hoch ist, was zur Folge hat, dass der Schardruck reduziert wird. Wenn die Amplitudenausschläge in einem vorgegebenen Bereich liegen und ein vorgegebener Frequenzbereich nicht über- oder unterschritten wird, befindet sich der Schardruck und der Abstützdruck der Tiefenführungsrolle in einem zulässigen Bereich. Eine Messung erfolgt dabei über eine Messeinrichtung zum Beispiel in Form eines Sensors, der die Frequenz, die Amplituden und oder die Beschleunigungskräfte erfasst.

Weitere Einzelheiten und Vorteile des Erfindungsgegenstandes ergeben sich aus der nachfolgenden Beschreibung und den zugehörigen Zeichnungen, in der zwei Ausführungsbeispiele mit den dazu notwendigen Einzelheiten und Einzelteilen dargestellt sind. Es zeigen:
- Figur 1: ein Doppelscheibenschar mit Tiefenführungsrolle, das kinematisch parallel in der Arbeitstiefe geführt wird und
- Figur 2: ein Doppelscheibenschar mit Tiefenführungsrolle, das über ein Parallelogramm parallel in der Arbeitstiefe geführt wird.

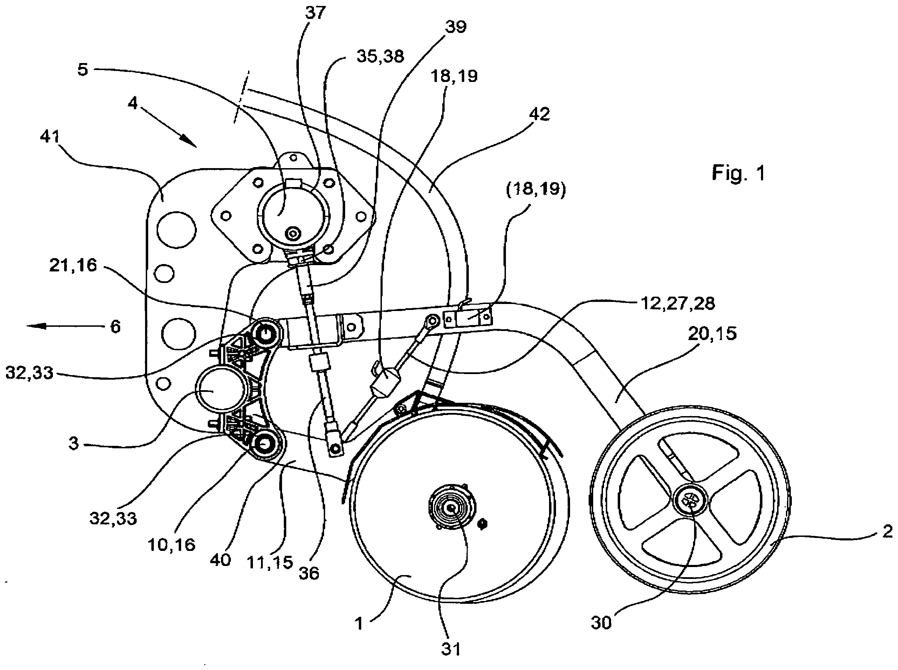

Das als Doppelscheibenschar 1 ausgebildete Verteilschar mit Tiefenführungsrolle 2 gemäß Figur 1 weist einen Scharrahmen 3 mit Konsolen 40 auf. Die Konsolen 40 sind jeweils mit zwei Gelenkachsen 16 ausgestattet. Die Gelenkachsen 16 der Konsolen 40 bilden zum einen eine Querachse 10 und zum anderen eine Schwenkachse 21. An der Querachse 10 ist der Scharträger 11 mit Doppelscheibenschar und an der Schwenkachse 21 ist der Schwenkarm 20 angeordnet. Der Scharträger 11 und der Schwenkarm 20 bilden Arme 15, die vertikal schwenkbar um die Gelenkachsen 16 schwenkbar sind. Der Scharträger 11 ist über ein Verbindungsglied 12 mit dem Schwenkarm 20 verbunden. Das Verbindungsglied 12 ist hier als Verbindungslenker 27 ausgebildet und besteht hier aus einem Seil 28, das mit einem als Sensor 19 ausgebildeten Messfühler 18 bestückt ist. Über den Messfühler 18 werden die Zugkräfte im Seil 28 ermittelt, die Basis für die Regelung der Abstützkraft des Doppelscheibenschares 1 auf die Tiefenführungsrolle 2 ist. Alternativ kann der Messfühler 18 bzw. Sensor 19 auch an einem anderen geeigneten Bauteil angeordnet werden, zum Beispiel auch am Schwenkarm 20. Über mehrere Verbindungsplatten 41 wird der Scharrahmen 3 mit der Schardruckeinrichtung 4 mit Energiespeicher 5 verbunden. Über die Schardruckeinstellung 4 mit Energiespeicher 5 wird über die Hydraulikzylinder 35 und die Stößel 36 immer so viel Druck auf das Doppelscheibenschar 1 ausgeübt, dass die Zugkraft im Verbindungslenker 27 bzw. Seil 28 möglichst konstant bleibt. Dies stellt dann sicher, dass auch der Abstützdruck der Tiefenführungsrolle 2 auf den Boden annähernd konstant bleibt. Demnach wird das Doppelscheibenschar 1 immer nur mit so viel Druck beaufschlagt, dass es die eingestellte Sätiefe erreicht und zusätzlich noch die Tiefenführungsrolle 2 mit einem vorgegebenen Druck belastet. Die Hydraulikzylinder 35 sind hier zu einem Energiespeicher 5 zusammengefasst, der aus einem geschlossenen Querrohr 37 mit mehreren nebeneinander angeordneten Kolbenstangenführungen 38 mit Kolbenstangen oder Plungerkolben 39 besteht. Jede Kolbenstange bzw. jeder Plungerkolben 39 wirkt über einen Stößel 36 auf einen Scharträger 11 ein. Durch das Vorsehen eines nicht dargestellten Waagebalkens kann auch ein Plungerkolben 39 über zwei Stößel auf zwei Scharträger 11 einwirken.

Das über die Saatschläuche 42 zu den Doppelscheibenscharen 1 geführte Saatgut wird somit auf die gewünschte Sätiefe abgelegt und zusätzlich mit der voreingestellten Druckkraft über die Tiefenführungsrolle 2 angedrückt. Der Verbindungslenker 27 ist so mit dem Scharträger 11 und dem Schwenkarm 20 verbunden, dass das Doppelscheibenschar 1 in der Arbeitstiefe kinematisch parallel zu der Tiefenführungsrolle 2 geführt wird. Die Querachse 10 und die Schwenkachse 21 bilden die Gelenkachsen 16, die als wartungsfreie Gelenke 32 ausgebildet sind. Die wartungsfreien Gelenke 32 bestehen aus Gummilagern 33, die keinem mechanischen Verschleiß unterliegen und die auch die während der Arbeit auftretenden Stöße auf das Doppelscheibenschar 1 und die Tiefenführungsrolle 2 etwas dämpfen.

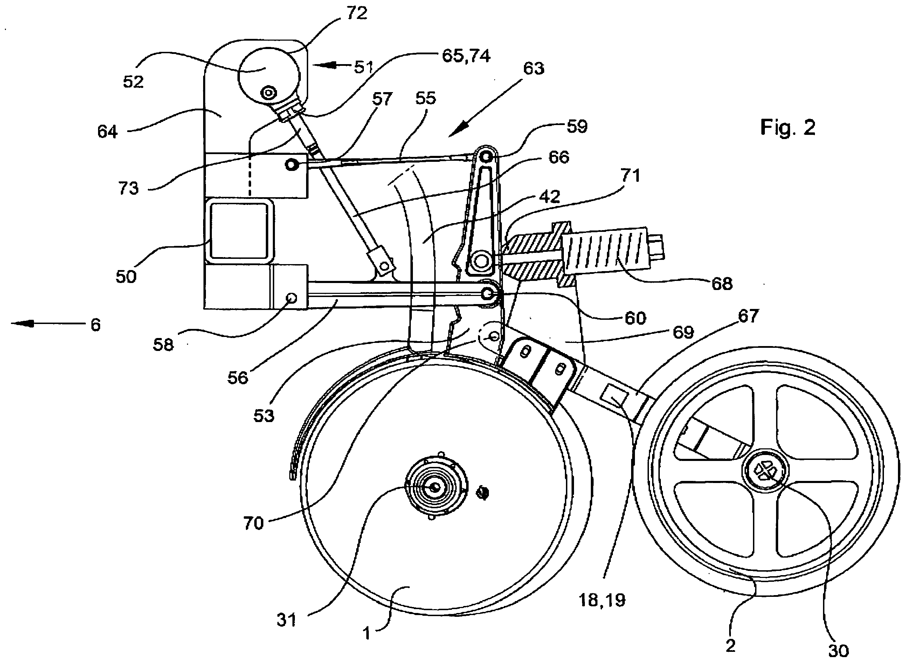

Figur 2 zeigt ein Doppelscheibenschar 1 mit Tiefenführungsrolle 2, bei dem der Scharträger 53 mittelbar über ein Parallelogramm 63 mit dem Scharrahmen 50 verbunden ist. Das Parallelogramm 63 besteht aus dem Traglenker 56 und dem Führungslenker 55, die parallel zueinander angeordnet sind. Der Traglenker 56 ist vorne über die Querachse 58 mit dem Scharrahmen 50 und über die Querachse 60 mit dem Scharträger 53 verbunden. Der oberhalb des Traglenkers 56 angeordnete Führungslenker 55 ist über die Querachse 57 mit dem Scharrahmen 50 und über die Querachse 59 mit dem Scharträger 53 verbunden. Der Führungslenker 55 ist hier als starrer Lenker ausgebildet. Er kann auch als nachgebendes Überlastelement ausgebildet sein. Unten am Scharträger 53 befinden sich die Scharachsen 31, um die die Doppelscheibenschare 1 drehbar gelagert sind. Um die Gelenkachse 70 ist die Tiefenführungsrolle 2 mit ihrem Schwenkarm 67 vertikal schwenkbar angeordnet. Der Schwenkarm 67 weist den Stützhebel 69 auf, der über die Federeinheit 68 mit dem Scharträger 53 in Anschlagstellung gebracht wird. Der Anschlag 71 des Stützhebels 69 liegt dann hinten am Scharträger 53 an. Bei Überlastung kann das Doppelscheibenschar 1 nach oben ausweichen, und zwar unabhängig von der Tiefenführungsrolle 2. In diesem Fall gibt die Federeinheit 68 nach und bringt den Stützhebel 69 nach Überwinden eines Bodenhindernisses wieder in Anschlagstellung. Der Anschlag 71 liegt dann wieder am Scharträger 53 an. Am Schwenkarm 67 ist die Tiefenführungsrolle 2 drehbar um ihre Achse 30 gelagert. Über den Sensor 19, der als Messfühler 18 dient, wird mittelbar der Abstützdruck der Tiefenführungsrolle 2 auf den Boden erfasst. Über eine nicht dargestellte Regeleinrichtung wird dann der Abstützdruck der Tiefenführungsrolle 2 wie vorgegeben geregelt. So wird das über die Saatschläuche 42 den Doppelscheibenscharen 1 zugeführte Saatgut auf die voreingestellte Tiefe abgelegt und mit dem voreingestellten Abstützdruck durch die Tiefenführungsrolle 2 angedrückt. Für den nötigen Schardruck bzw. Abstützdruck sorgt die Schardruckeinrichtung 51, die über die Verbindungsplatten 64 mit dem Scharrahmen 50 verbunden ist. Die Schardruckeinrichtung 51 weist Hydraulikzylinder 65 als Energiespeicher 52 auf, die direkt oder über den Stößel 66 über den Traglenker 56 und den Scharträger 53 das Doppelscheibenschar 1 in den Boden drückt und die Tiefenführungsrolle 2 mit der voreingestellten Abstützkraft belastet. Die Schardruckeinrichtung 51 besteht in diesem Fall aus einem Querrohr 72, an dem nebeneinander mehrere Kolbenstangenführungen 74 vorgesehen sind. Das Querrohr 72 ist geschlossen und bildet quasi einen Hydraulikzylinder mit mehreren Kolbenstangen bzw. Plungerkolben 73. Über die Stößel 66 wird die Druckkraft der Plungerkolben 73 mittelbar auf den Scharträger 53 und damit auf das Doppelscheibenschar 1 übertragen. Im Gegensatz zu der Ausführung gemäß Figur 1, wird das Doppelscheibenschar 1 nicht kinematisch über die Tiefenführungsrolle 2 parallel geführt, sondern mittels Parallelogramm 63.

## Patentansprüche

1. Verteilmaschine mit mindestens einem Scharrahmen (3, 50) mit Schardruckeinrichtung (4, 51) mit Energiespeicher (5, 52), und mit Verteilscharen (1), wobei jedes Verteilschar (1) um eine quer zur Arbeitsrichtung (6) angeordnete Querachse (10, 58) in vertikaler Richtung schwenkbar mittels Scharträger (11, 53) mit dem Scharrahmen (3, 50) der Verteilmaschine verbunden ist und über die Schardruckeinrichtung (4, 51) mit Energiespeicher (5, 52) für das Anlegen von Rillen in den Boden gedrückt wird und über die Tiefenführungsrolle (2) in der Arbeitstiefe geführt ist,
wobei die Schardruckeinrichtung (4,51) aus mehreren Hydraulikzylindern (35, 65) besteht, dass jedes Verteilschar (1) über einen Hydraulikzylinder (35, 65) in Verteilstellung gehalten wird, **dadurch gekennzeichnet dass** die Hydraulikzylinder (35, 65) so hydraulisch miteinander verbunden sind, das alle Hydraulikzylinder (35, 65) mit dem gleichen Systemdruck beaufschlagt werden
wobei das Verteilschar (1) unabhängig von der Tiefenführungsrolle (2) bei Überlastung nach oben ausweichen kann und dass nur ein Verteilschar (1) mit Tiefenführungsrolle (2) mit einem Messfühler (18) vorgesehen ist, der die Abstützkraft des Verteilschares (1) auf die Tiefenführungsrolle (2) und damit den Abstützdruck der Tiefenführungsrolle (2) auf den Boden erfasst und dass eine Regeleinrichtung vorgesehen ist, die die vom Messfühler erfasste Abstützkraft auf alle Verteilschare mit Tiefenführungsrollen überträgt und in Abhängigkeit von der Abstützkraft des Verteilschares (1) auf die Tiefenführungsrolle (2) den Abstützdruck der Tiefenführungsrolle (2) auf den Boden regelnd ausgebildet ist.

2. Verteilmaschine nach Anspruch 1,
**dadurch gekennzeichnet,**
**dass** der Abstützdruck der Tiefenführungsrolle (2) auf den Boden einstellbar ist.

3. Verteilmaschine nach Anspruch 1,
**dadurch gekennzeichnet,**
**dass** die über die Schardruckeinrichtung (4) und den Energiespeicher (5) auf das Verteilschar (1) ausgeübte Kraft durch die Regeleinrichtung so geregelt wird, dass der Abstützdruck der Tiefenführungsrolle (2) auf den Boden konstant bzw. annähernd konstant bleibt.

4. Verteilmaschine nach Anspruch 1,
**dadurch gekennzeichnet,**
**dass** die Tiefenführungsrolle (2) einen Schwenkarm (20) aufweist, der um eine quer zur Arbeitsrichtung (6) und im Abstand zu der Querachse (10) des Verteilschares (1) angeordneten Schwenkachse (21) in vertikaler Richtung schwenkbar mit dem Scharrahmen (3) und über ein Verbindungsglied (12) mit dem Scharträger (11) der Verteilschare (1) verbunden ist, wobei der Messfühler (18) dem Verbindungsglied (12), dem Scharträger (11), dem Schwenkarm (20), dem Scharrahmen (3) oder der Schwenkachse (21) der Tiefenführungsrolle zugeordnet ist.

5. Verteilmaschine nach Anspruch 1,
**dadurch gekennzeichnet,**
**dass** die Verteilmaschine eine Steuerung aufweist, die gemäß der abgespeicherten Daten einer zugehörigen Schlagdatei GPS-unterstützt den Abstützdruck der Tiefenführungsrolle (2) auf den Boden variabel regelnd ausgebildet ist.

6. Verteilmaschine nach Anspruch 1,
**dadurch gekennzeichnet,**
**dass** der Messfühler (18) als Sensor (19) oder Kraftmessbolzen ausgebildet ist.

7. Verteilmaschine nach Anspruch 1,
**dadurch gekennzeichnet,**
**dass** die Achse (30) der Tiefenführungsrolle (2) als Kraftmessbolzen ausgebildet ist.

8. Verteilmaschine nach Anspruch 4,
**dadurch gekennzeichnet,**
**dass** das Verbindungsglied (12) als Verbindungslenker (27) ausgebildet ist, der mit einem als Sensor (19) ausgebildeten Messfühler (18) bestückt ist.

9. Verteilmaschine nach Anspruch 8,
**dadurch gekennzeichnet,**
**dass** der Verbindungslenker (27) als Seil (28) ausgebildet ist und dass über den Messfühler (18) eine Ermittlung der Zugkräfte in dem Seil (28) erfolgt.

10. Verteilmaschine nach Anspruch 1,
**dadurch gekennzeichnet,**
**dass** das Verteilschar (1) über die Tiefenführungsrolle (2) parallel oder kinematisch parallel in der Arbeitstiefe geführt ist.

## Claims

1. A distribution machine having at least one coulter frame (3, 50) with coulter pressure device (4, 51), with energy storage units (5, 52), and with distribution coulters (1), wherein each distribution coulter (1) is pivotably connected in the vertical direction to the coulter frame (3, 50) of the distribution machine about a transverse axis (10, 58) arranged transversely to the working direction (6) by means of coulter supports (11, 53), and by way of the coulter pressure device (4, 51) with energy storage unit (5, 52) for the creating of grooves is pressed into the ground and via the depth guide roller (2) is guided in the working depth, wherein the coulter pressure device (4, 51) consists of multiple hydraulic cylinders (35, 65), that each distribution coulter (1) is held in the distribution position via a hydraulic cylinder (35, 65),
**characterized**
**in that** the hydraulic cylinders (35, 65) are hydraulically interconnected so that all hydraulic cylinders (35, 65) are subjected to the same system pressure, wherein the distribution coulter (1) can give way towards the top when overloaded independently of the depth guide roller (2) and in that only one distribution coulter (1) with depth guide roller (2) having a measurement sensor (18) is provided, which detects the support force of the distribution coulter (1) on the depth guide roller (2) and thus the support pressure of the depth guide roller (2) on the ground and in that a regulating device is provided, which transfers the support force detected by the measurement sensor to all distribution coulters with depth guide rollers and as a function of the support force of the distribution coulter (1) on the depth guide roller (2), is designed so as to regulate the support pressure of the depth guide roller (2) on the ground.

2. The distribution machine according to Claim 1,
**characterized**
**in that** the support pressure of the depth guide roller (2) on the ground is adjustable.

3. The distribution machine according to Claim 1,
**characterized**
**in that** the force exerted on the distribution coulter (1) via the coulter pressure device (4) and the energy storage unit (5) is regulated by the regulating device so that the support pressure of the depth guide roller (2) on the ground remains constant or approximately constant.

4. The distribution machine according to Claim 1,
**characterized**
**in that** the depth guide roller (2) comprises a pivot arm (20), which is pivotably connected in the vertical direction to the coulter frame (3) about a pivot axis (21) arranged transversely to the working direction (6) and spaced apart from the transverse axis (10) of the distribution coulter (1), and via a connecting member (12) to the coulter support (11) of the distribution coulter (1), wherein the measurement sensor (18) is assigned to the connecting member (12), the coulter support (11), the pivot arm (20), the coulter frame (3) or the pivot axis (21) of the depth guide roller.

5. The distribution machine according to Claim 1,
**characterized**
**in that** the distribution machine comprises a control, which is designed so as to variably regulate the support pressure of the depth guide roller (2) on the ground in accordance with the stored data of an associated lot file in a GPS supported manner.

6. The distribution machine according to Claim 1,
**characterized**
**in that** the measurement sensor (18) is formed as a sensor (19) or force measurement bolt.

7. The distribution machine according to Claim 1,
**characterized**
**in that** the axle (30) of the depth guide roller (2) is formed as a force measurement bolt.

8. The distribution machine according to Claim 4,
**characterized**
**in that** the connecting member (12) is formed as a connecting link (27), which is fitted with a measurement sensor (18) formed as sensor (19).

9. The distribution machine according to Claim 8,
**characterized**
**in that** the connecting link (27) is formed as a cable (28) and in that by way of the measurement sensor (18) a determination of the tensile forces in the cable (28) is effected.

10. The distribution machine according to Claim 1,
**characterized**
**in that** the distribution coulter (1) is guided parallel or kinematically parallel in the working depth via the depth guide roller (2).

## Revendications

1. Épandeuse, pourvue d'au moins un module semeur (3, 50) avec système de pression d'enterrage (4, 51) avec accumulateur d'énergie (5, 52), et pourvue de socs distributeurs (1), chaque soc distributeur (1) étant relié avec le module semeur (3, 50) de l'épandeuse en étant susceptible de pivoter dans la direction verticale autour d'un axe transversal (10, 58) placé à la transversale de la direction de travail (6) au moyen de supports de soc (11, 53) et étant poussé dans le sol par le système de pression d'enterrage (4, 51) avec accumulateur d'énergie (5, 52), pour la pose de stries dans le sol et étant guidé par la roue de contrôle de profondeur (2) à la profondeur de travail, le système de pression d'enterrage (4,51) étant constitué de plusieurs vérins hydrauliques (35, 65), de sorte que chaque soc distributeur (1) soit maintenu par l'intermédiaire d'un vérin hydraulique (35, 65) en position d'épandage,
**caractérisée**
**en ce que** les vérins hydrauliques (35, 65) sont reliés les uns aux autres par hydraulique de telle sorte que tous les vérins hydrauliques (35, 65) soient soumis à la même pression de système, en cas de surcharge, le soc distributeur (1) étant susceptible de dévier vers le haut, indépendamment de la roue de contrôle de profondeur (2) et **en ce que** seul un soc distributeur (1) avec roue de contrôle de profondeur (2) avec une sonde de mesure (18) est prévu, qui détecte la force d'appui du soc distributeur (1) sur la roue de contrôle de profondeur (2) et ainsi la pression d'appui de la roue de contrôle de profondeur (2) sur le sol et **en ce qu'**il est prévu un dispositif de régulation, qui transmet la force d'appui détectée par la sonde de mesure sur tous les socs distributeurs avec roues de contrôle de profondeur et en fonction de la force d'appui du soc distributeur (1) sur la roue de contrôle de profondeur (2), la pression d'appui de la roue de contrôle de profondeur (2) sur le sol est conçue de manière régulatrice.

2. Épandeuse selon la revendication 1,
**caractérisée**
**en ce que** la pression d'appui de la roue de contrôle de profondeur (2) sur le sol est réglable.

3. Épandeuse selon la revendication 1,
**caractérisée**
**en ce que** la force exercée par l'intermédiaire du système de pression d'enterrage (4) et de l'accumulateur d'énergie (5) sur le soc distributeur (1) est régulée par le dispositif de régulation de telle sorte que la pression d'appui de la roue de contrôle de profondeur (2) sur le sol reste constante ou approximativement constante.

4. Épandeuse selon la revendication 1,
**caractérisée**
**en ce que** la roue de contrôle de profondeur (2) comporte un bras pivotant (20) qui est relié avec le module semeur (3) en étant susceptible de pivoter dans la direction verticale autour d'un axe de pivotement (21) placé à la transversale de la direction de travail (6) et avec un écart par rapport à l'axe transversal (10) du soc distributeur (1) et étant relié par l'intermédiaire d'un élément de liaison (12) avec le support de soc (11) du soc distributeur (1), la sonde de mesure (18) étant associée à l'élément de liaison (12), au support de soc (11), au bras pivotant (20), au module semeur (3) ou à l'axe de pivotement (21) de la roue de contrôle de profondeur.

5. Épandeuse selon la revendication 1,
**caractérisée**
**en ce que** l'épandeuse comporte un système de commande, qui selon les données sauvegardées d'un fichier champ, avec assistance GPS conçoit de manière variablement régulatrice la pression d'appui de la roue de contrôle de profondeur (2) sur le sol.

6. Épandeuse selon la revendication 1,
**caractérisée**
**en ce que** la sonde de mesure (18) est conçue sous la forme d'un capteur (19) ou d'un axe de mesure de la force.

7. Épandeuse selon la revendication 1,
**caractérisée**
**en ce que** l'axe (30) de la roue de contrôle de profondeur (2) est conçu sous la forme d'un axe de mesure de la force.

8. Épandeuse selon la revendication 4,
**caractérisée**
**en ce que** l'élément de liaison (12) est conçu sous la forme d'un levier de liaison (27) qui est équipé d'une sonde de mesure (18) conçue sous la forme d'un capteur (19).

9. Épandeuse selon la revendication 8,
**caractérisée**
**en ce que** le levier de liaison (27) est conçu sous la forme d'un câble (28) et **en ce que** par l'intermédiaire de la sonde de mesure (18), il s'effectue une détermination des forces de traction dans le câble (28).

10. Épandeuse selon la revendication 1,
**caractérisée**
**en ce que** le soc distributeur (1) est guidé par l'intermédiaire de la roue de contrôle de profondeur (2) à la parallèle ou à la parallèle cinématique dans la profondeur de travail.
